(19) **Europäisches Patentamt**
**European Patent Office**
**Office européen des brevets**

(11) **EP 1 867 960 B1**

(12) **EUROPÄISCHE PATENTSCHRIFT**

(45) Veröffentlichungstag und Bekanntmachung des Hinweises auf die Patenterteilung:
**29.07.2009 Patentblatt 2009/31**

(51) Int Cl.:
**G01D 5/36** (2006.01)     **G01D 5/38** (2006.01)

(21) Anmeldenummer: **07008483.5**

(22) Anmeldetag: **26.04.2007**

(54) **Optische Positionsmesseinrichtung**

Optical positioning device

Dispositif optique de mesure de la position

(84) Benannte Vertragsstaaten:
**AT BE BG CH CY CZ DE DK EE ES FI FR GB GR HU IE IS IT LI LT LU LV MC MT NL PL PT RO SE SI SK TR**

(30) Priorität: **09.05.2006 DE 102006021484**

(43) Veröffentlichungstag der Anmeldung:
**19.12.2007 Patentblatt 2007/51**

(73) Patentinhaber: **Dr. Johannes Heidenhain GmbH 83301 Traunreut (DE)**

(72) Erfinder: **Holzapfel, Wolfgang 83119 Obing (DE)**

(56) Entgegenhaltungen:
**EP-B1- 0 513 427**     **DE-A1- 19 748 802**

Anmerkung: Innerhalb von neun Monaten nach Bekanntmachung des Hinweises auf die Erteilung des europäischen Patents im Europäischen Patentblatt kann jedermann nach Maßgabe der Ausführungsordnung beim Europäischen Patentamt gegen dieses Patent Einspruch einlegen. Der Einspruch gilt erst als eingelegt, wenn die Einspruchsgebühr entrichtet worden ist. (Art. 99(1) Europäisches Patentübereinkommen).

**Beschreibung**

Die vorliegende Erfindung betrifft eine optische Positionsmesseinrichtung gemäß dem Oberbegriff des Anspruchs 1.

Eine gattungsgemäße optische Positionsmesseinrichtung ist aus der EP 513 427 B1 der Anmelderin bekannt. Diese ist zur Erfassung der Position von zwei relativ zueinander in mindestens einer Messrichtung beweglichen Objekten geeignet. Hierzu umfasst die bekannte Positionsmesseinrichtung eine Maßverkörperung, die mit einem der beiden Objekte verbunden ist. Die Maßverkörperung weist eine sich in Messrichtung erstreckende Inkrementalteilung sowie mindestens eine Referenzmarkierung an einer Referenzposition auf. Die Referenzmarkierung besteht hierbei aus einer Struktur mit einer sich örtlich veränderlichen Teilungsperiode, d.h. sie wird aus einer Struktur gebildet, die eine Vielzahl von verschiedenen Teilungsperioden umfasst. Derartige Strukturen werden auch als sog. gechirpte Teilungsstrukturen oder gechirpte Gitter bezeichnet. Ferner umfasst die Positionsmesseinrichtung eine Abtasteinheit, die mit dem anderen der beiden Objekte verbunden ist und Abtastmittel aufweist, die zur Erzeugung mindestens eines verschiebungsabhängigen Inkrementalsignals sowie mindestens eines Referenzsignals an einer Referenzposition über die optische Abtastung der Inkrementalteilung und der Referenzmarkierung entlang der Messstrecke dienen.

Die aus der EP 513 427 B1 bekannte Positionsmesseinrichtung basiert auf einem sog. interferentiellen Abtastprinzip. Die verschiebungsabhängigen Abtastsignale in Form der Inkremental- und Referenzsignale werden hierbei aus der konstruktiven und destruktiven Überlagerung mehrerer Teilstrahlenbündel gewonnen, die im Fall der Relativbewegung von Maßverkörperung und Abtasteinheit verschiebungsabhängige Phasenverschiebungen erfahren. Auf diese Art und Weise lassen sich hochaufgelöste Positionsinformationen in Bezug auf die Relativposition der beiden Objekte gewinnen.

Üblicherweise wird in derartigen Systemen die resultierende Impulsbreite des Referenzsignals dergestalt gewählt, dass diese der resultierenden Signalperiode der Inkrementalsignale entspricht. Um dies sicherzustellen, müssen die örtlich variierenden Teilungsperioden $TP_{REF}$ der Referenzmarkierung in einem definierten bzw. festen Verhältnis zur Teilungsperiode $TP_{INC}$ der Inkrementalteilung gewählt werden. In der Praxis erstrecken sich die gewählten Teilungsperioden $TP_{REF}$ der als gechirptes Gitter ausgeführten Referenzmarkierung typischerweise im Bereich zwischen $1.5*TP_{INC}$ und $5*TP_{INC}$; in diesem Zusammenhang sei neben der oben erwähnten Druckschrift ferner auf die DE 197 48 802 A1 der Anmelderin verwiesen, die derartige Dimensionierungsregeln für gechirpte Referenzmarkierungen offenbart. Das heißt, dass die Teilungsperioden $TP_{REF}$ der gechirpten Referenzmarkierung üblicherweise deutlich größer sind als die Teilungsperiode $TP_{INC}$ der Inkrementalteilung. Im Hinblick auf die optische Wirkung auf die darauf einfallenden Strahlenbündel bedeutet dies, dass die resultierenden Beugungs- bzw. Ablenkwinkel der Strahlenbündel zur Referenzsignalerzeugung deutlich kleiner sind als die resultierenden Beugungswinkel der Strahlenbündel zur Inkrementalsignalerzeugung. Kleinere Ablenkwinkel der für die Referenzsignalerzeugung genutzten Teilstrahlenbündel haben aber wiederum Probleme bei bestimmten Abtastprinzipien zur Folge. So gibt es etwa optische Positionsmesseinrichtungen, wie sie z.B. in der DE 101 44 659 A1 offenbart sind, die eine räumliche Trennung der auf die Maßverkörperung einfallenden und der davon abgelenkten Teilstrahlenbündel erfordern. Im Fall von sehr kleinen Ablenkwinkeln für die zur Referenzsignalerzeugung genutzten Teilstrahlenbündel kann dies nur dann gewährleistet werden, wenn ein sehr großer Abtastabstand zwischen Maßverkörperung und Abtasteinheit gewählt wird. Ein großer Abtastabstand wiederum ist nachteilig in Bezug auf die Anbautoleranzen der Positionsmesseinrichtung; zudem erfordert ein großer Abtastabstand mitunter eine aufwändige Kollimation der Lichtquelle in der Abtasteinheit.

Aufgabe der vorliegenden Erfindung ist es daher, eine optische Positionsmesseinrichtung anzugeben, die eine Erzeugung eines Referenzsignals mittels gechirpter Referenzmarkierungen bei kleinen Abtastabständen ermöglicht.

Dieses Problem wird erfindungsgemäß durch eine optische Positionsmesseinrichtung mit den kennzeichnenden Merkmalen des Anspruchs 1 gelöst.

Vorteilhafte Ausführungen der erfindungsgemäßen Positionsmesseinrichtung ergeben sich aus den Maßnahmen in den abhängigen Ansprüchen.

Erfindungsgemäß wird nunmehr für die Referenzmarkierung der optischen Positionsmesseinrichtung eine mittlere Teilungsperiode der gechirpten Teilungsstruktur im Bereich der Teilungsperiode der Inkrementalteilung gewählt, d.h. gegenüber dem Stand der Technik demzufolge eine deutlich geringere mittlere Teilungsperiode der gechirpten Teilungsstruktur. Darüber ist sichergestellt, dass die resultierenden Ablenkwinkel für die zur Erzeugung des Referenzsignals genutzten Teilstrahlenbündel hinreichend groß sind, um eine räumliche Trennung der auf die Maßverkörperung einfallenden und abgelenkten Teilstrahlenbündel zu gewährleisten. Dergestalt ist nunmehr möglich, auch bei Abtastprinzipien eine gechirpte Referenzmarkierung einzusetzen, die dies aufgrund der oben erläuterten Problematik ursprünglich nicht erlaubten.

Die erfindungsgemäße optische Positionsmesseinrichtung zur Erfassung der Position von zwei relativ zueinander in mindestens einer Messrichtung beweglichen Objekten umfasst hierbei:

- eine Maßverkörperung, die mit einem der beiden Objekte verbunden ist und die eine sich in Messrichtung erstrek-

kende Inkrementalteilung sowie mindestens eine Referenzmarkierung an einer Referenzposition aufweist, wobei die Referenzmarkierung aus einer Struktur mit einer sich örtlich veränderlichen Teilungsperiode besteht,

- eine Abtasteinheit, die mit dem anderen der beiden Objekte verbunden ist und die Abtastmittel umfasst, die zur Erzeugung mindestens eines Referenzsignals an der Referenzposition dienen, wobei
- die Referenzmarkierung eine mittlere Teilungsperiode im Bereich der Teilungsperiode der Inkrementalteilung besitzt. Vorzugsweise wird die mittlere Teilungsperiode $TP_{REF,m}$ der Referenzmarkierung im nachfolgenden Bereich liegend gewählt:

$$0.5 * TP_{INC} \leq TP_{REF,m} \leq 1.5 * TP_{INC,}$$

mit:

$TP_{INC}$ := Teilungsperiode der Inkrementalteilung
$TP_{REF,m}$ := mittlere Teilungsperiode der Referenzmarkierung

In einer vorteilhaften Ausführungsform ist die mittlere spektrale Breite der Frequenzen der Teilungsperioden der Referenzmarkierung folgendermaßen gewählt:

$$\Delta f_{REF} = 0.6 * f_{INC,}$$

mit:

$f_{REF}$ := $1/TP_{REF}$
$f_{INC}$ := $1/TP_{INC}$

Die Abtastmittel können derart ausgebildet sein, dass darüber mehrere weiterverarbeitbare, phasenverschobene Teil-Referenzsignale erzeugbar sind.

Beispielsweise ist die Erzeugung von N Teil-Referenzsignalen möglich, die jeweils um 360°/N phasenverschoben zueinander sind, wobei N = 3 oder N = 4 gewählt ist.

Den Abtastmitteln ist vorzugsweise eine Signalverarbeitungselektronik nachgeordnet, um aus den Teil-Referenzsignalen ein definiertes Referenzsignal an der Referenzposition zu erzeugen.

Die Signalverarbeitungselektronik ist z.B. derart ausgebildet, dass aus den Teil-Referenzsignalen ein Maximum-Referenzsignal sowie ein Minimum-Referenzsignal erzeugbar ist und diese Signale in Differenz verschaltbar sind, so dass an der Referenzposition ein Referenzsignal resultiert.

In einer weiteren vorteilhaften Ausführungsform verläuft der Abtaststrahlengang zur Erzeugung des Referenzsignals grundsätzlich identisch zum Abtaststrahlengang zur Erzeugung eines Inkrementalsignals verläuft. Zur Erzeugung des Referenzsignals auf der Maßverkörperung ist hierbei eine Referenzmarkierung aus einer Struktur mit einer sich örtlich veränderlichen Teilungsperiode angeordnet, die unterschiedliche Ablenkwirkungen auf die Teilstrahlenbündel in Messrichtung besitzt. Zur Erzeugung des Inkrementalsignals ist auf der Maßverkörperung eine in Messrichtung periodische Inkrementalteilung mit einer konstanten Teilungsperiode angeordnet.

Vorzugsweise ist hierbei die Maßverkörperung dergestalt ausgebildet, dass die an der Maßverkörperung gebeugten Teilstrahlenbündel eine derartige Ablenkung erfahren, dass eine Trennung der Teilstrahlenbündel resultiert.

Die vorliegende Erfindung lässt sich grundsätzlich sowohl in Verbindung mit rotatorischen Messanordnungen als auch in Verbindung mit linearen Messanordnungen realisieren. Ferner können sowohl Auflicht- als auch Durchlicht-Abtastungsanordnungen erfindungsgemäß realisiert werden.

Weitere Vorteile sowie Einzelheiten der vorliegenden Erfindung ergeben sich aus der nachfolgenden Beschreibung eines Ausführungsbeispiels anhand der beiliegenden Figuren.

Hierbei zeigt

Figur 1 eine schematisierte Darstellung des Abtaststrahlenganges in einem Ausführungsbeispiel der erfindungsgemäßen optischen Positionsmesseinrichtung;

Figur 2 eine Draufsicht auf die Maßverkörperung der Positionsmesseinrichtung aus Figur 1;

Figur 3a und 3b    jeweils eine Draufsicht auf die Ober- und Unterseite der verwendeten Abtastplatte der Positionsmesseinrichtung aus Figur 1;

Figur 4    eine schematische Darstellung einer geeigneten Signalverarbeitungselektronik inclusive verschiedenen Signalen zur Erläuterung einer möglichen Auswertung der Teil-Referenzsignale;

Figur 5a und 5b    jeweils Darstellungen des Spektrums der Teilungsfrequenzen in erfindungsgemäßen Referenzmarkierungen sowie in Referenzmarkierungen gemäß dem Stand der Technik;

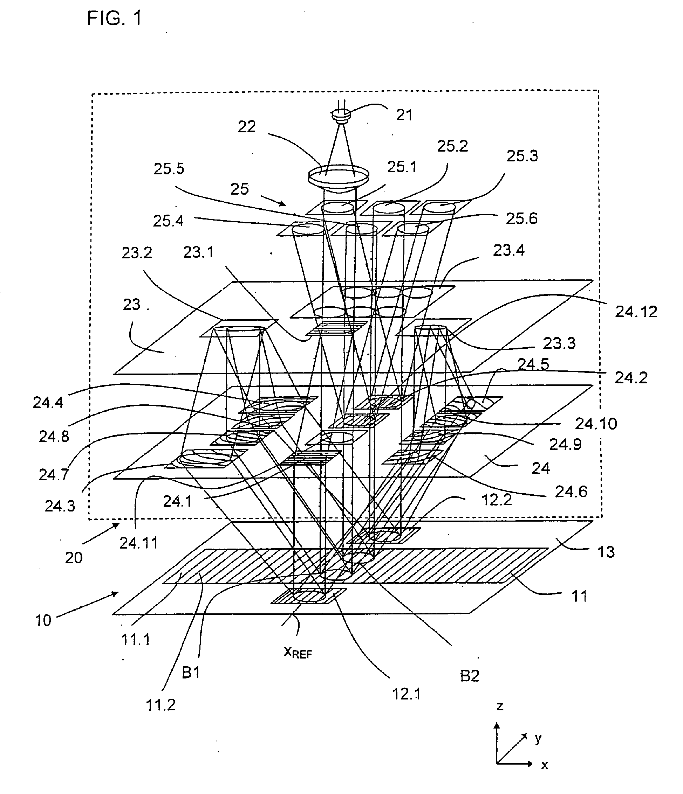

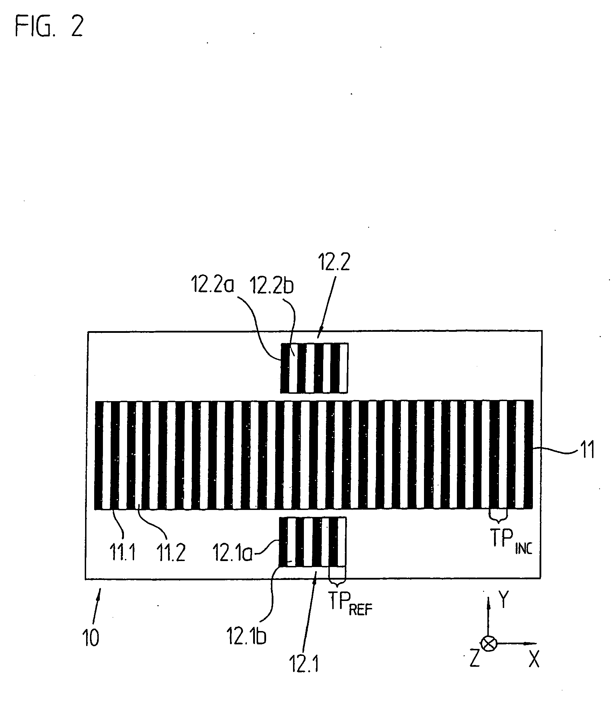

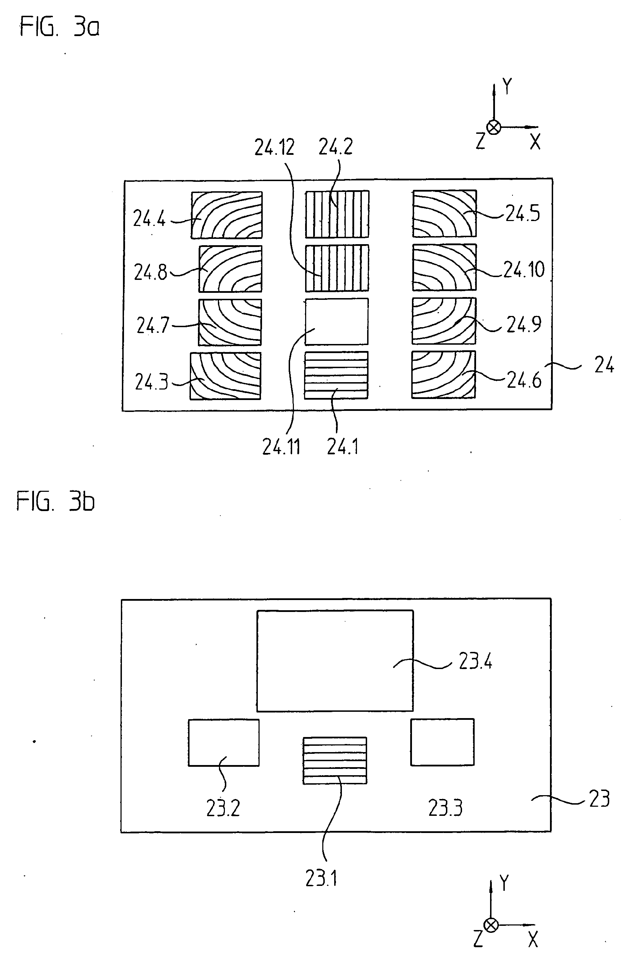

Anhand der Figuren 1, 2 sowie 3b, 3b sei nachfolgend ein erstes Ausführungsbeispiel einer erfindungsgemäßen Positionsmesseinrichtung erläutert, insbesondere die darin vorgesehenen Abtaststrahlengänge. Figur 1 zeigt in schematisierter Form die Abtaststrahlengänge dieses Beispiels in einer perspektivischen Darstellung, Figur 2 eine Draufsicht auf die eingesetzte Maßverkörperung, die Figuren 3a und 3b je eine Draufsicht auf die Ober und Unterseite der verwendeten Abtastplatte.

Es sei an dieser Stelle darauf hingewiesen, dass die erfindungsgemäße Dimensionierung der mittleren Teilungsperiode der Referenzmarkierung im Bereich der Teilungsperiode der verwendeten Inkrementalteilung selbstverständlich nicht auf das nachfolgend erläuterte optische Abtastprinzip dieses Ausführungsbeispiels beschränkt ist. Die erfindungsgemäßen Maßnahmen bzgl. der Referenzsignalerzeugung können demzufolge auch bei alternativen Abtast-Strahlengängen eingesetzt werden.

Im dargestellten Ausführungsbeispiel ist die erfindungsgemäße Positionsmesseinrichtung als Auflicht-Längenmessgerät ausgebildet und umfasst eine Abtasteinheit 20, die gegenüber der Maßverkörperung 10 in Messrichtung x beweglich angeordnet ist. Maßverkörperung 10 und Abtasteinheit 20 sind z.B. mit zwei zueinander in Messrichtung x verschiebbar angeordneten Objekten verbunden, etwa zwei zueinander beweglichen Maschinenteilen. Über die erzeugten, positionsabhängigen Ausgangssignale (Inkrementalsignale, Referenzsignale) der erfindungsgemäßen Positionsmesseinrichtung kann eine nachgeordnete Steuereinheit die Bewegung dieser Maschinenteile in bekannter Art und Weise geeignet steuern.

Die Maßverkörperung 10 umfasst im vorliegenden Beispiel eine lineare Inkrementalteilung 11, die auf einem Teilungsträger 13 angeordnet ist. Die Inkrementalteilung besteht aus periodisch in Messrichtung x angeordneten Teilbereichen 11.1, 11.2 mit unterschiedlichen optischen Eigenschaften, die sich in der Teilungsebene in y-Richtung erstrecken. Hierbei besitzen die Teilbereiche 11.1, 11.2 der dargestellten Ausführungsform unterschiedliche phasenschiebende Wirkungen auf die hiervon reflektierten Strahlenbündel. Das heißt, die Maßverkörperung 10 ist als sog. Auflicht-oder Reflexions-Phasengitter ausgebildet; die darauf einfallenden Strahlenbündel werden in +1. und -1. Beugungsordnung reflektiert.

Die Inkrementalteilung 11 der abgetasteten Maßverkörperung 10 besitzt eine über die Messlänge konstante Teilungsperiode $TP_{INC}$; diese ist definiert als die sich in Messrichtung x ergebende Breite zweier benachbarter Teilbereiche 11.1, 11.2 mit unterschiedlichen optischen Wirkungen. In einer möglichen Ausführungsform wird $TP_{INC} = 2\mu m$ gewählt.

Beidseitig benachbart zur Spur mit der Inkrementalteilung 11 ist auf Seiten der Maßverkörperung 10 jeweils eine Referenzmarkierung 12.1, 12.2 an einer Referenzposition $x_{REF}$ auf dem Teilungsträger 13 angeordnet; grundsätzlich können selbstverständlich auch an mehreren Referenzpositionen entsprechende Referenzmarkierungen angeordnet werden. Die Referenzmarkierungen 12.1, 12.2 sind wie die Inkrementalteilung 11 ebenfalls als Auflicht-Phasengitter ausgebildet und bestehen aus Strukturen alternierend angeordneter Teilbereiche 12.1 a, 12.1b, 12.2a, 12.2b mit unterschiedlichen phasenschiebenden Wirkungen auf die reflektierten Strahlenbündel.

Wie in Figur 1 und 2 schematisch angedeutet und nachfolgend noch im Detail erläutert sei, besitzen die Referenzmarkierungen 12.1, 12.2 in Messrichtung x im Unterschied zur Inkrementalteilung 11 jedoch örtlich veränderliche Teilungsperioden $TP_{REF}$. Die Referenzmarkierungen 12.1, 12.2 sind demzufolge als sog. gechirpte Teilungsstrukturen ausgebildet, deren mittlere Teilungsperioden $TP_{REF,m}$ erfindungsgemäß im Bereich der Teilungsperiode $TP_{INC}$ der Inkrementalteilung 11 gewählt wird. In einem typischen Beispiel wird demzufolge $TP_{REF,m} \cong TP_{INC} \cong 2\mu m$ gewählt.

Zur Erzeugung der verschiebungsabhängigen Ausgangssignale in Form der periodischen Inkrementalsignale und des mindestens einen Referenzsignals an mindestens einer definierten Referenzposition $x_{REF}$, sind in der Abtasteinheit 20 eine Reihe von Komponenten angeordnet, die der Einfachheit halber zusammenfassend als Abtastmittel bezeichnet seien. Zu den Abtastmitteln gehören im vorliegenden Beispiel etwa eine Lichtquelle, eine Abtastplatte mit verschiedenen optisch wirksamen Elementen wie Gittern und Reflektoren sowie optoelektronische Detektorelemente. In alternativen Ausführungsformen können die verschiedenen Komponenten der Abtastmittel selbstverständlich variieren. Nachfolgend sei das Zusammenwirken der verschiedenen Elemente der Abtastmittel anhand der Beschreibung der verschiedenen Abtaststrahlengänge des dargestellten Ausführungsbeispiels erläutert.

## Erzeugung der Inkrementalsignale

Das von einer Lichtquelle 21, etwa einer Laserdiode, emittierte Strahlenbündel wird zunächst über eine Kollimationsoptik 22 in ein Strahlenbündel mit parallelem Strahlengang umgewandelt. Das kollimierte Strahlenbündel bzw. zumindest ein Teil davon trifft dann nach dem unabgelenkten Passieren eines Abspaltgitters 23.1 auf der Oberseite 23 der Abtastplatte und eines Fensterbereichs 24.11 auf der Unterseite 24 der Abtastplatte ein erstes Mal im Bereich B1 auf die Inkrementalteilung 11 der Maßverkörperung 10. Dort erfolgt eine Aufspaltung in die +1. und -1. Beugungsordnungen, die wieder in Richtung Abtasteinheit 20 zurückreflektiert werden. In der Abtasteinheit 20 gelangen die zurückreflektierten Teilstrahlenbündel auf transmittierende Abtastgitter 24.7, 24.9 mit gekrümmten Gitterlinien, die auf der Unterseite 24 einer Abtastplatte angeordnet sind. Von der Abtastplatte sind in Figur 1 nur die Ober- und Unterseite 23, 24 mit den darauf angeordneten optischen Komponenten schematisiert angedeutet. Über die Abtastgitter 24.7, 24.9 werden die jeweiligen transmittierten Teilstrahlenbündel in Messrichtung x gesehen parallel zur optischen Achse entlang der z-Richtung gerichtet bzw. abgelenkt; senkrecht hierzu, d.h. in y-Richtung erfolgt eine Fokussierung der transmittierten Teilstrahlenbündel.

Die dergestalt fokussierten und abgelenkten Teilstrahlenbündel gelangen dann auf plane Reflektorflächen 23.2, 23.3, die an der Oberseite 23 der Abtastplatte und im Fokus der Abtastgitter 24.7, 24.9 angeordnet sind. Von dort resultiert eine Rückreflexion der Teilstrahlenbündel in Richtung der Unterseite 24 der Abtastplatte bzw. in Richtung Maßverkörperung 10. Auf der Unterseite 24 der Abtastplatte gelangen die von den Reflektorflächen 23.2, 23.3 reflektierten Teilstrahlenbündel auf weitere transmittierende Abtastgitter 24.8, 24.10 mit wiederum gekrümmten Gitterlinien. Über diese Abtastgitter 24.8, 24.10 erfolgt erneut eine Kollimation der transmittierten Teilstrahlenbündel in y-Richtung sowie eine Ablenkung der transmittierten Teilstrahlenbündel in Messrichtung x entgegengesetzt zur ursprünglichen Einfallsrichtung.

Anschließend treffen die Teilstrahlenbündel im Bereich B2 ein zweites Mal auf die Inkrementalteilung 11 der Maßverkörperung 10 und werden dort erneut in +1. und -1. Beugungsordnung in Richtung Abtasteinheit 20 reflektiert.

Die derart von der Inkrementalteilung 11 ein zweites Mal reflektierten Teilstrahlenbündel propagieren anschließend kollinear in Richtung Abtasteinheit 20 und treffen dort auf ein Aufspaltgitter 24.12 auf der Unterseite 24 der Abtastplatte. Über das Aufspaltgitter 24.12 erfolgt in bekannter Art und Weise eine räumliche Aufspaltung der interferierenden Paare von Teilstrahlenbündeln in die +1./0./-1. Beugungsordnung. Die in die verschiedenen Raumrichtungen propagierenden Paare interferierender Teilstrahlenbündel werden schließlich nach dem Passieren geeigneter Aperturen in einem Bereich 23.4 auf der Oberseite 23 der Abtastplatte von drei Detektorelementen 25.4, 25.5, 25.6 erfasst und in verschiebungsabhängig modulierte, um 120° phasenverschobene Stromsignale bzw. Inkrementalsignale umgewandelt.

Um eine Phasenverschiebung der Inkrementalsignale um 120° bewirken zu können, durchlaufen die beiden interferierenden Teilstrahlenbündel - in Figur 1 nicht dargestellte - λ/4-Plättchen. Über diese werden die ursprünglich linear-polarisierten (Laserlicht-) Teilstrahlenbündel in links- und rechts-zirkularpolarisierte Teilstrahlenbündel umgewandelt. Nach der Überlagerung der beiden Teilstrahlenbündel resultiert ein wiederum linear-polarisiertes Strahlenbündel. Dessen Polarisationsrichtung dreht sich bei einer Relativbewegung von Abtasteinheit 20 und Maßverkörperung 10. Ebenfalls in Figur 1 nicht dargestellte, geeignet orientierte Polarisatoren vor den Detektorelementen 25.4, 25.5, 25.6 ermöglichen die Einstellung der Phasenverschiebung der Stromsignale auf jeweils 120°. Derartige - und ggf. auch alternative - Auswerteverfahren für Interferenzsignale sind grundsätzlich bekannt und die hierzu erforderlichen Komponenten von daher der Einfachheit halber in Figur 1 nicht dargestellt.

In bekannter Art und Weise können die derart erzeugten Inkrementalsignale von einer nachgeordneten, nicht dargestellten, Steuereinheit bzw. Folgeelektronik weiterverarbeitet werden.

## Erzeugung des Referenzsignals

Prinzipiell identisch zum Abtaststrahlengang zur Erzeugung der Inkrementalsignale verläuft im vorliegenden Beispiel der Abtaststrahlengang zur Erzeugung des Referenzsignals, wie nachfolgend erläutert sei. Korrekterweise müsste im vorliegenden Beispiel die Rede von drei erzeugten Teil-Referenzsignalen sein, die dann durch eine geeignete Signalverarbeitungselektronik zum eigentlich gewünschten Referenzsignal weiterverarbeitet werden; nachfolgend ist zunächst der Einfachheit halber nur vom Referenzsignal die Rede.

Das von der Lichtquelle 21 kommende Strahlenbündel gelangt nach der Kollimation über die Kollimationsoptik 22 auf das Abspaltgitter 23.1 auf der Oberseite 23 der Abtastplatte. Das Abspaltgitter 23.1 bewirkt eine Aufteilung des einfallenden kollimierten Strahlenbündels. Ein Teil des aufgeteilten Strahlenbündels wird wie vorab erläutert zur Inkrementalsignalerzeugung genutzt, ein weiterer Teil zur Erzeugung des Referenzsignals.

Der zur Erzeugung des Referenzsignals genutzte Teil des kollimierten Strahlenbündels wird vom Abspaltgitter 23.1 in Richtung eines Ablenkgitters 24.1 auf der Unterseite 24 der Abtastplatte abgelenkt. Das Ablenkgitter 24.1 bewirkt eine Umlenkung des transmittierten Teilstrahlenbündels dahingehend, dass dieses parallel zur optischen Achse ausgerichtet wird und auf die erste Referenzmarkierung 12.1 auf der Maßverkörperung 10 auftrifft.

Ab der ersten Referenzmarkierung 12.1 verläuft der weitere Abtaststrahlengang zur Erzeugung des Referenzsignals prinzipiell wie derjenige zur Erzeugung der Inkrementalsignale ab dem ersten Auftreffen der Teilstrahlenbündel im Bereich B1 der Inkrementalteilung 11.

Hierbei werden von der Referenzmarkierung 12.1 Teilstrahlenbündel in die +1. und -1. Beugungsordnung in Richtung der Abtasteinheit 10 zurückreflektiert. Aufgrund der gechirpten Ausbildung der Referenzmarkierung 12.1 tritt hierbei das in -1. Beugungsordnung reflektierte Teilstrahlenbündel in Messrichtung x leicht divergent aus, das in +1. Beugungsordnung reflektierte Teilstrahlenbündel hingegen in Messrichtung x leicht konvergent. Sie treffen nachfolgend auf Abtastgitter 24.3, 24.6, die auf der Unterseite der Abtastplatte angeordnet sind und wiederum gekrümmte Gitterlinien aufweisen. Von den Abtastgittern 24.3, 24.6 werden die transmittierten Teilstrahlenbündel wie die oben erwähnten Teilstrahlenbündel zur Inkrementalsignalerzeugung abgelenkt und fokussiert. Dabei gleicht eine leicht variierende ablenkende Wirkung in Messrichtung x die leichte Divergenz bzw. Konvergenz der eintretenden Teilstrahlenbündel aus, Die transmittierten Teilstrahlenbündel sind dann in Messrichtung x vollständig kollimiert. Anschließend treffen sie auf die planen Reflektorflächen 23.2, 23.3 auf der Oberseite 23 der Abtastplatte. Von hier erfolgt die Rückreflexion in Richtung der Unterseite 24 der Abtastplatte, wo weitere Abtastgitter 24.4, 24.5 durchlaufen werden. Über diese Abtastgitter 24.4, 24.5 mit wiederum gekrümmten Gitterlinien erfolgt wie oben erläutert eine Kollimation der Teilstrahlenbündel in y-Richtung sowie eine Ablenkung der Teilstrahlenbündel in Messrichtung x entgegengesetzt zu den ursprünglichen Einfallsrichtungen. Es entstehen dabei wiederum in Messrichtung x leicht divergente und konvergente Teilstrahlenbündel. Im Bereich einer zweiten Referenzmarkierung 12.2 treffen die Teilstrahlenbündel ein zweites Mal auf die Maßverkörperung 10 und werden dort wiederum in +1. und -1. Beugungsordnung in Richtung Abtasteinheit reflektiert. Die zweite Referenzmarkierung 12.2 ist identisch zur ersten Referenzmarkierung 12.1 ausgebildet.

Nach der zweiten Reflexion und Beugung im Bereich der zweiten Referenzmarkierung 12.2 propagieren schließlich auch in diesem Abtaststrahlengang die interferierenden Teilstrahlenbündel kollinear in Richtung Abtasteinheit 20 und treffen dort auf ein weiteres Aufspaltgitter 24.2 auf der Unterseite 24 der Abtastplatte. Über das Aufspaltgitter 24.2 erfolgt auch in diesem Abtaststrahlengang die räumliche Aufspaltung der interferierenden Paare von Teilstrahlenbündeln in die +1./0./-1. Beugungsordnung. Die in die verschiedenen Raumrichtungen propagierenden Paare interferierender Teilstrahlenbündel werden nach dem Passieren dreier weiterer Aperturen im Bereich 23.4 auf der Oberseite 23 der Abtastplatte von drei weiteren Detektorelementen 25.1, 25.2, 25.3 erfasst und in drei verschiebungsabhängig modulierte, um 120° phasenverschobene Stromsignale bzw. Teil-Referenzsignale umgewandelt. Analog zur Inkrementalsignalerzeugung sind in den Figuren auch die für die Erzeugung der Phasenverschiebung der Teil-Referenzsignale notwendigen λ/4-Plättchen und Polarisatoren aus Übersichtlichkeits-Gründen nicht dargestellt. Grundsätzlich entspricht deren Funktion derjenigen, wie sie bereits oben in Verbindung mit der Erzeugung phasenverschobener Inkrementalsignale erläutert wurde.

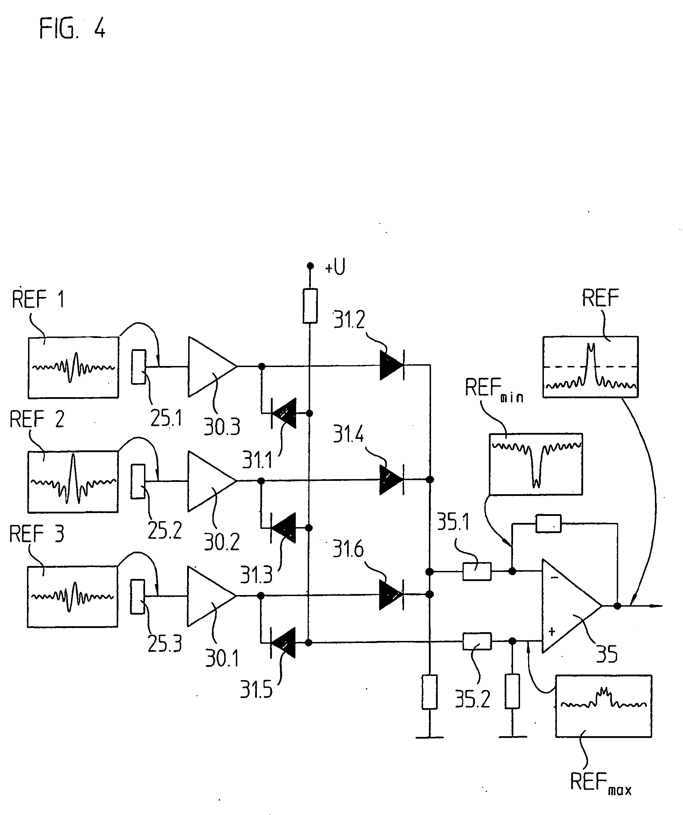

Eine Möglichkeit zur Verarbeitung bzw. Auswertung der derart erzeugten phasenverschobenen Teil-Referenzsignale REF1, REF2, REF3 sei nachfolgend anhand von Figur 4 erläutert. Diese Figur zeigt eine schematisierte Blockschaltbild-Darstellung einer hierzu geeigneten Signalverarbeitungselektronik, an deren Ausgang das gewünschte Referenzsignal REF an der Referenzposition $x_{REF}$ zur Verfügung steht.

Die drei an den Detektorelementen 25.1, 25.2, 25.3 anliegenden Teil-Referenzsignale REF1, REF2, REF3 erfahren zunächst jeweils über die Elemente 30.1, 30.2, 303 eine Strom/Spannungswandlung. Über die in Figur 4 dargestellte Verschaltung der verschiedenen Elemente erfolgt nachfolgend eine Erzeugung eines Maximum-Referenzsignals $REF_{max}$ und eines Minimum-Referenzsignals $REF_{min}$. Die in diesem Beispiel gewählte Verschaltungsanordnung nutzt bekannte Schaltungstechniken mit verspannten Dioden 31.1 - 31.6 und stellt letztlich einen Demodulator dar, der die Trägerfrequenz der Teil-Referenzsignale REF1, REF2, REF3 eliminiert. Die Signale $REF_{max}$, $REF_{min}$ werden über die Widerstände 35.1, 35.2 unterschiedlich verstärkt und über das Komparatorelement 35 wie in Figur 4 gezeigt in Differenz zueinander verschaltet. Aufgrund der geeignet gewählten, unterschiedlichen Verstärkung des Maximum-Referenzsignals $REF_{max}$ und des Minimum-Referenzsignals $REF_{min}$ resultiert am Ausgang des Komparatorelements 35 das gewünschte Referenzsignal REF bzw. der gewünschte Referenzimpuls.

Aufgrund der erläuterten Art der Verarbeitung der erzeugten Teil-Referenzsignale REF1, REF2, REF3 über ein Demodulationsverfahren resultiert die Breite des eigentlichen Referenzsignals REF am Ausgang nun nicht mehr aus der mittleren Frequenz der Referenzmarkierungs-Teilung der gechirpten Referenzmarkierung, sondern aus der mittleren spektralen Breite $\Delta f_{REF}$ der Verteilung der Frequenzen der Teilungsperioden $TP_{REF}$ der gechirpten Referenzmarkierung. Um hierbei eine Breite des Referenzsignals REF im Bereich der Breite der erzeugten Inkrementalsignale zu gewährleisten, erweist sich die Wahl der mittleren spektralen Breite $\Delta f_{REF}$ der Frequenzen der Teilungsperioden $TP_{REF}$ der gechirpten Referenzmarkierung auf der Maßverkörperung gemäß folgender Beziehung (1) als vorteilhaft:

$$\Delta f_{REF} = 0.6 * f_{INC} \qquad\qquad (Gl.\ 1)$$

mit:

$$f_{REF} \quad := 1/TP_{REF}$$
$$f_{INC} \quad := 1/TP_{INC}$$

Dies bedeutet mit anderen Worten ausgedrückt, dass die mittlere Teilungsperiode $TP_{REF,m}$ der gechirpten Referenzmarkierung unabhängig von der Breite der Referenzmarkierung gewählt werden kann und damit vorteilhafterweise auch im Bereich der Teilungsperiode der Inkrementalteilung liegen kann.

Hierbei erweist sich folgender Bereich für die mittlere Teilungsperiode $TP_{REF,m}$ der gechirpten Referenzmarkierung als vorteilhaft:

$$0.5 * TP_{INC} \leq TP_{REF,m} \leq 1.5 * TP_{INC} \qquad \text{(Gl. 2)}$$

mit:

$TP_{INC}$ := Teilungsperiode der Inkrementalteilung
$TP_{REF,m}$ := mittlere Teilungsperiode der Referenzmarkierung

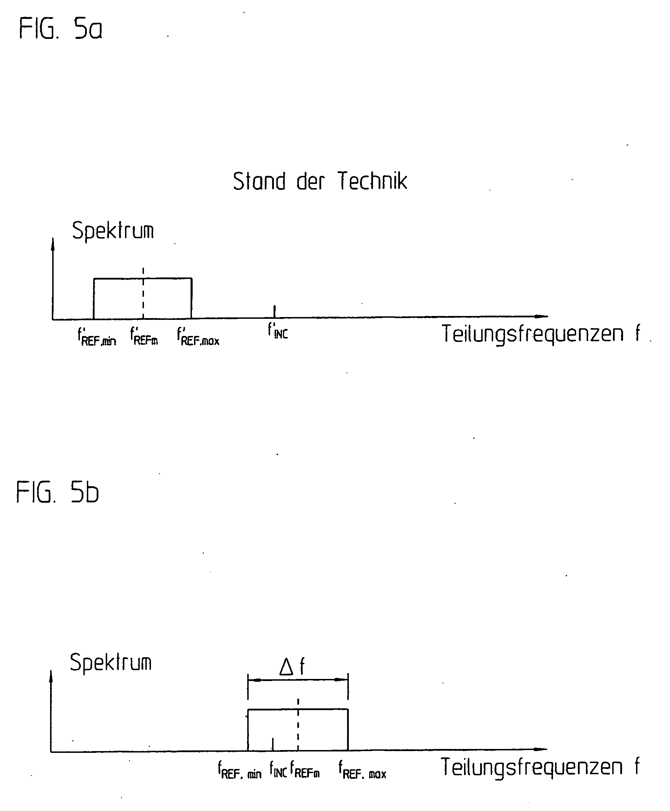

In den Figuren 5a und 5b ist das Spektrum der Teilungsfrequenzen $f_{REF}$ der gechirpten Referenzmarkierung für erfindungsgemäße Referenzmarkierungen (Fig. 5b) und für bislang übliche Referenzmarkierungen (Fig. 5a) dargestellt.

Wie aus Figur 5a hierbei ersichtlich ist, wurde der Bereich zwischen minimaler und maximaler Teilungsfrequenz $f_{REF,min}$ und $f_{REF,max}$ und damit die mittlere Teilungsfrequenz $f_{REF,m}$ der gechirpten Referenzmarkierung üblicherweise deutlich kleiner als die Teilungsfrequenz $f_{INC}$ der abgetasteten Inkrementalteilung gewählt.

Deutlich unterschiedlich hierzu wird nunmehr erfindungsgemäß wie aus Figur 5b ersichtlich, das Spektrum der Teilungsfrequenzen $f_{REF}$ der gechirpten Referenzmarkierung in den Bereich der Teilungsfrequenz $f_{INC}$ der abgetasteten Inkrementalteilung verschoben; vorzugsweise gemäß den oben erläuterten Bedingungen (1) und (2). In einer vereinfachten Darstellung bedeutet dies die spektrale Verschiebung des Spektrums einer hochfrequenten Modulation der Referenzsignale, die durch eine nachfolgende elektronische Demodulation wieder eliminiert wird.

Es hat sich hierbei erwiesen, dass die Form der Spektrums der Teilungsfrequenzen $f_{REF}$ der gechirpten Referenzmarkierung in Bezug auf das resultierende Referenzsignal REF eher eine untergeordnete Rolle spielt. Maßgeblich ist, dass die mittlere spektrale Breite sowie die mittlere Teilungsperiode $TP_{REF,m}$ gemäß den beiden obigen Bedingungen (1) und (2) gewählt werden.

Aufgrund der dergestalt gewählten mittleren Teilungsperiode $TP_{REF,m}$ der gechirpten Referenzmarkierung resultieren nunmehr auch Ablenkwinkel der reflektierten Teilstrahlenbündel, die eine hinreichende Trennung der in die verschiedenen Raumrichtungen reflektierten bzw. abgelenkten Teilstrahlenbündel in den Abtaststrahlengängen ermöglichen. Damit ist letztlich auch der gewünschte größere Abtastabstand zwischen Maßverkörperung und Abtasteinheit zu gewährleisten.

Neben dem erläuterten Ausführungsbeispiel gibt es im Rahmen der vorliegenden Erfindung selbstverständlich noch weitere Ausgestaltungsmöglichkeiten.

Beispielsweise könnten zur elektronischen Demodulation anstelle der im Beispiel in Figur 4 genutzten Dioden auch andere nichtlineare elektronische Bauteile wie Quadrierer oder aber Logarithmierer verwendet werden.

Es ist ferner möglich, die spektrale Breite der Frequenzen der Teilungsperioden in der gechirpten Referenzmarkierung zu reduzieren, um dergestalt ein breiteres Referenzsignal zu erzeugen. Dies kann etwa dann erforderlich sein, wenn die Abhängigkeit des Referenzsignals von Änderungen des Abtastabstands zwischen Maßverkörperung und Abtasteinheit verringert werden soll. Aufgrund des dann breiteren Referenzsignals sollte der Anwender der erfindungsgemäßen Positionsmesseinrichtung dann die Referenzmarkierung immer von einer Seite her anfahren, um eine reproduzierbare Referenzierung der Inkrementalsignale gewährleisten zu können.

Des weiteren ist es möglich, auch alternative Abtastoptiken bzw. Abtaststrahlengänge in Verbindung mit den erfindungsgemäßen Überlegungen zu realisieren. Grundsätzlich vorteilhaft erweist sich die vorliegende Erfindung hierbei immer dann, wenn eine Strahltrennung des mindestens einen einfallenden und/oder mindestens einen ausfallenden, an der Maßverkörperung gebeugten Strahlenbündels durch die Beugung an der Maßverkörperung bestimmt wird und diese Strahltrennung für den jeweiligen Abtaststrahlengang wesentlich ist. So kann z.B. ein senkrecht auf die Maßverkörperung auftreffendes Strahlenbündel in eine +1. und eine -1. Beugungsordnung aufgespalten werden und die entsprechenden Teilstrahlenbündel auf getrennte Abtastelemente einer Abtastplatte gelenkt werden. Ein entsprechender Strahlverlauf liegt etwa im Beispiel der Figur 1 zwischen dem Fensterbereich 24.11 und dem Bereich B1 bis hin zu den Abtastgittern 24.7 und 24.9 vor.

Alternativ kann auch ein gegenläufiger Strahlverlauf von getrennten Abtastgittern 24.8 und 24.10 über einen Bereich B2 zu einem gemeinsamen Element 24.12 mit überlagerten Teilstrahlenbündeln vorgegeben sein.

Auch kann in einem weiteren Fall eine ausreichende Trennung von Teilstrahlenbündeln in der Nähe der Maßverkörperung wichtig sein, um dort z.B. verschiedene polarisationsoptische Bauteile einbringen zu können.

In all den erwähnten Fällen ermöglicht die vorliegende Erfindung einen weitgehend gleichartigen Abtaststrahlengang für die Erzeugung der Referenzsignale und der Inkrementalsignale. Dies ist grundsätzlich für die Stabilität der Zuordnung der Referenzposition zu einer Signalperiode der Inkrementalsignale sehr wichtig, insbesondere wenn Kippungen zwischen der Abtasteinheit und der Maßverkörperung resultieren.

**Patentansprüche**

1. Optische Positionsmesseinrichtung zur Erfassung der Position von zwei relativ zueinander in mindestens einer Messrichtung (x) beweglichen Objekten mit

   - einer Maßverkörperung, die mit einem der beiden Objekte verbunden ist und die eine sich in Messrichtung (x) erstreckende Inkrementalteilung (11) sowie mindestens eine Referenzmarkierung (12.1, 12.2) an einer Referenzposition ($x_{REF}$) aufweist, wobei die Referenzmarkierung (12.1, 12.2) aus einer Struktur mit einer sich örtlich veränderlichen Teilungsperiode ($TP_{REF}$) besteht,
   - einer Abtasteinheit (20), die mit dem anderen der beiden Objekte verbunden ist und die Abtastmittel umfasst, die zur Erzeugung mindestens eines Referenzsignals (REF) an der Referenzposition ($x_{REF}$) dienen,

   **dadurch gekennzeichnet,**
   **dass** die Referenzmarkierung (12.1, 12.2) eine mittlere Teilungsperiode ($TP_{REF,m}$) im Bereich der Teilungsperiode ($TP_{INC}$) der Inkrementalteilung (11) besitzt.

2. Optische Positionsmesseinrichtung nach Anspruch 1, **dadurch gekennzeichnet, dass** die mittlere Teilungsperiode ($TP_{REF,m}$) der Referenzmarkierung (12.1, 12.2) im nachfolgenden Bereich liegend gewählt ist:

$$0.5 * TP_{INC} \leq TP_{REF,m} \leq 1.5 * TP_{INC},$$

   mit:

   $TP_{INC}$ := Teilungsperiode der Inkrementalteilung
   $TP_{REF,m}$ := mittlere Teilungsperiode der Referenzmarkierung

3. Optische Positionsmesseinrichtung nach Anspruch 1 oder 2, **dadurch gekennzeichnet, dass** die mittlere spektrale Breite der Frequenzen ($\Delta f_{REF}$) der Teilungsperioden ($TP_{REF}$) der Referenzmarkierung (12.1, 12.2) folgendermaßen gewählt ist:

$$\Delta f_{REF} = 0.6 * f_{INC},$$

   mit:

   $f_{REF}$ :- $1/TP_{REF}$
   $f_{INC}$ := $1/TP_{INC}$

4. Optische Positionsmesseinrichtung nach mindestens einem der vorhergehenden Ansprüche, **dadurch gekennzeichnet, dass** die Abtastmittel derart ausgebildet sind, dass darüber mehrere weiterverarbeitbare, phasenverschobene Teil-Referenzsignale (REF1, REF2, REF3) erzeugbar sind.

5. Optische Positionsmesseinrichtung nach Anspruch 4, **dadurch gekennzeichnet, dass** N Teil-Referenzsignale (REF1, REF2, REF3) erzeugbar sind, die jeweils um 360°/N phasenverschoben zueinander sind, wobei N = 3 oder N = 4 gewählt ist.

6. Optische Positionsmesseinrichtung nach Anspruch 4, **dadurch gekennzeichnet, dass** den Abtastmitteln eine Signalverarbeitungselektronik nachgeordnet ist, um aus den Teil-Referenzsignalen (REF1, REF2, REF3) ein definiertes Referenzsignal (REF) an der Referenzposition ($x_{REF}$) zu erzeugen.

7. Optische Positionsmesseinrichtung nach Anspruch 6, **dadurch gekennzeichnet, dass** die Signalverarbeitungselektronik derart ausgebildet ist, dass aus den Teil-Referenzsignalen (REF1, REF2, REF3) ein Maximum-Referenzsignal ($REF_{max}$) sowie ein Minimum-Referenzsignal ($REF_{max}$) erzeugbar ist und diese Signale in Differenz verschaltbar sind, so dass an der Referenzposition ($x_{REF}$) das Referenzsignal (REF) resultiert.

8. Optische Positionsmesseinrichtung nach mindestens einem der vorhergehenden Ansprüche, **dadurch gekennzeichnet, dass** der Abtaststrahlengang zur Erzeugung des Referenzsignals (REF) grundsätzlich identisch zum Abtaststrahlengang zur Erzeugung eines Inkrementalsignals verläuft, wobei

- zur Erzeugung des Referenzsignals (REF) auf der Maßverkörperung (10) eine Referenzmarkierung (12.1, 12.2) aus einer Struktur mit einer sich örtlich veränderlichen Teilungsperiode ($TP_{REF}$) angeordnet ist, die unterschiedliche Ablenkwirkungen auf die Teilstrahlenbündel in Messrichtung (x) besitzt und
- zur Erzeugung des Inkrementalsignals auf der Maßverkörperung (10) eine in Messrichtung (x) periodische Inkrementalteilung (11) mit einer konstanten Teilungsperiode ($TP_{INC}$) angeordnet ist.

9. Optische Positionsmesseinrichtung nach Anspruch 8, **dadurch gekennzeichnet, dass** die Maßverkörperung (10) dergestalt ausgebildet ist, dass die an der Maßverkörperung (10) gebeugten Teilstrahlenbündel eine derartige Ablenkung erfahren, dass eine Trennung der Teilstrahlenbündel resultiert.

**Claims**

1. An optical position-measuring device for purposes of registering the position of two objects that can move relative to one another in at least one measurement direction (x), with

- a standard, which is connected with one of the two objects, and which has an incremental graduation (11) extending in the measurement direction (x) and at least one reference mark (12.1, 12.2) at a reference position ($x_{REF}$), wherein the reference mark (12.1, 12.2) consists of a structure with a locally varying graduation period ($TP_{REF}$),
- a sampling unit (20), which is connected with the other of the two objects and comprises the scanning means, which serve to generate at least one reference signal (REF) at the reference position ($x_{REF}$),

**characterised in that**
the reference mark (12.1, 12.2) possesses an average graduation period ($TP_{REF,m}$) in the range of the graduation period ($TP_{INC}$) of the incremental graduation (11).

2. The optical position-measuring device according to Claim 1, **characterised in that** the average graduation period ($TP_{REF,m}$) of the reference mark (12.1, 12.2) is selected to be in the following range:

$$0.5 * TP_{INC} \leq TP_{REF,m} \leq 1.5 * TP_{INC},$$

where:
$TP_{INC}$ := graduation period of the incremental graduation
$TP_{REF,m}$ := average graduation period of the reference mark

3. The optical position-measuring device according to Claim 1 or 2, **characterised in that** the average spectral width of the frequencies ($\Delta f_{REF}$) of the graduation periods ($TP_{REF}$) of the reference mark (12.1, 12.2) is selected in the following manner:

$$\Delta f_{REF} = 0.6 * f_{INC},$$

where:

$$f_{REF} := 1/TP_{REF}$$
$$f_{INC} := 1/TP_{INC}$$

4. The optical position-measuring device according to one of the previous claims, **characterised in that** the scanning means are designed such that furthermore a plurality of phase-displaced, reference signal components (REF1, REF2, REF3) can be generated and processed further.

5. The optical position-measuring device according to Claim 4, **characterised in that** N reference signal components (REF1, REF2, REF3) can be generated, which in each case are phase-displaced relative to one another by 360°/N, wherein N is selected to be = 3 or 4.

6. The optical position-measuring device according to Claim 4, **characterised in that** a signal processing electronic system is arranged downstream of the scanning means, to generate from the reference signal components (REF1, REF2, REF3) a defined reference signal (REF) at the reference position ($x_{REF}$).

7. The optical position-measuring device according to Claim 6, **characterised in that** the signal processing electronic system is designed such that from the reference signal components (REF1, REF2, REF3) a maximum reference signal ($REF_{max}$) and a minimum reference signal ($REF_{min}$) can be generated, and these signals can be differentially connected such that the reference signal (REF) results at the reference position ($x_{REF}$).

8. The optical position-measuring device according to one of the previous claims, **characterised in that** the optical scanning path for purposes of generating the reference signal (REF) runs essentially identically to the optical scanning path for purposes of generating an incremental signal, wherein

   - for purposes of generating the reference signal (REF) on the standard (10) a reference mark (12.1, 12.2) is arranged from a structure with a locally varying graduation period ($TP_{REF}$), which exhibits diverse deflection effects on the ray bundle component in the measurement direction (x), and
   - for purposes of generating the incremental signal on the standard (10) an incremental graduation (11) periodic in the measurement direction (x) is arranged with a constant graduation period ($TP_{INC}$).

9. The optical position-measuring device according to Claim 8, **characterised in that** the standard (10) is designed such that the ray bundle components that are diffracted at the standard (10) experience a deflection such that a separation of the ray bundle components results.

**Revendications**

1. Dispositif de mesure de position optique pour détecter la position de deux objets mobiles l'un par rapport à l'autre dans au moins une direction de mesure (x) comportant

   - une mesure matérialisée, qui est reliée à un des deux objets et présente une graduation incrémentielle (11) s'étendant dans la direction de mesure (x) ainsi que au moins un marquage de référence (12.1, 12.2) sur une position de référence ($x_{REF}$), moyennant quoi le marquage de référence (12.1, 12.2) est constitué d'une structure avec une période de graduation ($TP_{REF}$) variable localement,
   - une unité de balayage (20), qui est reliée à l'autre des deux objets et comprend les moyens de balayage, qui servent à générer au moins un signal de référence (REF) sur la position de référence ($x_{REF}$),

   **caractérisé en ce que**
   le marquage de référence (12.1, 12.2) possède une période de graduation moyenne ($TP_{REF,m}$) au niveau de la période de graduation ($TP_{INC}$) de la graduation incrémentielle (11).

2. Dispositif de mesure de position optique selon la revendication 1, **caractérisé en ce que** la période de graduation moyenne (TP$_{REF,m}$) du marquage de référence (12.1, 12.2) est choisie comme se trouvant dans la plage suivante :

$$0.5 \, * \, TP_{INC} \, \leq \, TP_{REF,m} \, \leq \, 1.5 \, * \, TP_{INC},$$

avec
TP$_{INC}$ := période de graduation de la graduation incrémentielle
TP$_{REF,m}$ : période de graduation moyenne du marquage de référence.

3. Dispositif de mesure de position optique selon la revendication 1 ou 2, **caractérisé en ce que** la largeur spectrale moyenne des fréquences ($\Delta f_{REF}$) des périodes de graduation (TP$_{REF}$) du marquage de référence (12.1, 12.2) est choisie de la manière suivants :

$$\Delta f_{REF} \, = \, 0.6 \, * \, f_{INC},$$

avec :

  f$_{REF}$ := 1/TP$_{REF}$
  f$_{INC}$ := 1/TP$_{INC}$

4. Dispositif de mesure de position optique selon au moins une des revendications précédentes, **caractérisé en ce que** les moyens de balayage sont configurés de telle sorte que sur ceux-ci peuvent être générés plusieurs signaux de référence partiels (REF1, REF2, REF3) à décalage de phase, dont le traitement peut être poursuivi.

5. Dispositif de mesure de position optique selon la revendication 4, **caractérisé en ce que** N signaux de référence partiels (REF1, REF2, REF3) peuvent être générés, lesquels sont respectivement décalés en phase de 360°/N les uns par rapport aux autres, moyennant quoi N = 3 ou N = 4 est choisi.

6. Dispositif de mesure de position optique selon la revendication 4, **caractérisé en ce que** un système électronique de traitement de signaux est subordonné aux moyens de balayage, afin de générer, à partir des signaux de référence partiels (REF1, REF2, REF3), un signal de référence défini (REF) sur la position de référence (x$_{REF}$).

7. Dispositif de mesure de position optique selon la revendication 6, **caractérisé en ce que** le système électronique de traitement de signaux est configuré de telle sorte que à partir des signaux de référence partiels (REF1, REF2, REF3), un signal de référence maximal (REF$_{max}$) ainsi qu'un signal de référence minimal (REF$_{min}$) puissent être générés et ces signaux peuvent être connectés en différence, de telle sorte que le signal de référence (REF) en résulte sur la position de référence (x$_{REF}$).

8. Dispositif de mesure de position optique selon au moins une des revendications précédentes, **caractérisé en ce que** l'étape de rayonnement de balayage pour générer le signal de référence (REF) se déroule de manière fondamentalement identique à l'étape de rayonnement de balayage pour générer un signal incrémentiel, moyennant quoi

   - pour générer le signal de référence (REF) sur la mesure matérialisée (10), un marquage de référence (12.1, 12.2) constitué d'une structure avec une période de graduation (TP$_{REF}$) variable localement est disposé, lequel possède des effets de déviation différents sur le faisceau de rayonnement partiel dans la direction de mesure (x) et
   - pour générer le signal incrémentiel sur la mesure matérialisée (10), une graduation incrémentielle (11) périodique dans la direction de mesure (x) avec une période de graduation constante (TP$_{INC}$) est disposée.

9. Dispositif de mesure de position optique selon la revendication 8, **caractérisé en ce que** la mesure matérialisée (10) est configurée de telle sort que le faisceau de rayonnement partiel diffracté sur la mesure matérialisée (10) subisse une déflection de telle sorte qu'une séparation des faisceaux de rayonnement partiels en résulte.

FIG. 1

FIG. 2

## FIG. 3a

## FIG. 3b

FIG. 4

FIG. 5a

Stand der Technik

Spektrum

$f'_{REF,min}$   $f'_{REFm}$   $f'_{REF,max}$   $f'_{INC}$   Teilungsfrequenzen f

FIG. 5b

Spektrum   $\Delta f$

$f_{REF,min}$ $f_{INC}$$f_{REFm}$   $f_{REF,max}$   Teilungsfrequenzen f

**IN DER BESCHREIBUNG AUFGEFÜHRTE DOKUMENTE**

**In der Beschreibung aufgeführte Patentdokumente**

- EP 513427 B1
- DE 19748802 A1
- DE 10144659 A1